# EUROPÄISCHE PATENTSCHRIFT

(11) **EP 2 641 006 B1**
(45) Veröffentlichungstag und Bekanntmachung des Hinweises auf die Patenterteilung: **25.09.2024**
(21) Anmeldenummer: 11791433.3
(22) Anmeldetag: 14.11.2011
(51) Int. Cl.: F16L 11/127, F16L 53/00

(54) **KONFEKTIONIERTE ELEKTRISCH BEHEIZBARE MEDIENLEITUNG SOWIE VERFAHREN ZUM HERSTELLEN EINER SOLCHEN MEDIENLEITUNG**
PREFABRICATED ELECTRICALLY HEATABLE MEDIA LINE AND METHOD FOR PRODUCING A MEDIA LINE OF THIS KIND
CONDUITE DE FLUIDES CONFECTIONNÉE À CHAUFFAGE ÉLECTRIQUE ET PROCÉDÉ DE FABRICATION DE LADITE CONDUITE

(30) Priorität: 18.11.2010 DE 102010051550
(43) Veröffentlichungstag der Anmeldung: 25.09.2013
(73) Patentinhaber: Voss Automotive GmbH, 51688 Wipperfürth (DE)
(72) Erfinder: WESTMEIER, Jörg, 40468 Düsseldorf (DE); HEIENBROK, Mark, 51766 Engelskirchen (DE); GRAMCKOW, Erik, 53757 St. Augustin (DE); SACHSE, Martin, 51688 Wipperfürth (DE); ETSCHEID, Tobias, 51789 Lindlar (DE)
(74) Vertreter: Rebbereh, Cornelia
(86) Internationale Anmeldenummer: PCT/EP2011/005719
(87) Internationale Veröffentlichungsnummer: WO 2012/065710

(56) Entgegenhaltungen:
- EP-A1- 1 793 152
- WO-A1-2009/080501
- DE-U1- 202005 004 602
- DE-U1- 202007 010 502
- US-A- 5 862 303

## Beschreibung

Die Erfindung betrifft eine konfektionierte elektrisch beheizbare Medienleitung mit zumindest einem Rohrleitungsteil mit integrierter elektrisch leitfähiger Einrichtung und mit zumindest einer Verbindungseinrichtung zum fluidischen Verbinden, sowie ein Verfahren zum Herstellen einer solchen Medienleitung.

Derartige elektrisch beheizbare Medienleitungen sind im Stand der Technik bekannt. Die elektrisch leitfähige Einrichtung dient dabei dem Beheizen der Medienleitung und die Verbindungseinrichtung dem fluidischen Verbinden der Medienleitung beispielsweise mit einem Aggregat. Aus der DE 10 2005 037 183 B3 ist eine beheizbare Fluidleitung mit einem Rohr, zumindest einem Heizwiderstand sowie zumindest zwei elektrischen Zuleitungen für den Heizwiderstand bekannt, wobei die elektrischen Zuleitungen parallel zum Rohr angeordnet sind und der Heizwiderstand quer zur Längserstreckung zwischen den beiden elektrischen Zuleitungen angeordnet ist. Ferner ist eine Schelle vorgesehen, die eine Schneide aufweist, die die eine elektrische Zuleitung kontaktiert. Die Schneide der Schelle dringt in das Material des Rohres von außen in einer solchen Tiefe ein, dass die ansonsten abgedeckte elektrische Zuleitung kontaktiert wird. Über der Schelle wird der Anschluss der elektrischen Zuleitung an eine Spannungsversorgung realisiert.

Die DE 10 2006 051 413 B4 offenbart eine andere Möglichkeit, eine elektrisch beheizbare Fluidleitung mit elektrischen Anschlüssen zu versehen. Die Fluidleitung weist einen inneren Querschnittsbereich, der einen Medium führenden Kanal umgibt, eine Heizleiteranordnung und einen äußeren Querschnittsbereich auf. Die Heizleiteranordnung ist in wärmeleitender Verbindung mit dem inneren Querschnittsbereich angeordnet und der äußere Querschnittsbereich umgibt die Heizleiteranordnung. Zwischen dem inneren Querschnittsbereich und dem äußeren Querschnittsbereich ist eine Zwischenschicht angeordnet, die die Heizleiteranordnung vom äußeren Querschnittsbereich trennt und die mechanisch eine geringere Stabilität als der innere Querschnittsbereich und der äußere Querschnittsbereich aufweist. Die Zwischenschicht kann abgerieben werden, um eine Kontaktierung der Heizleiteranordnung zu ermöglichen. Der äußere Querschnittsbereich kann durchtrennt und von dem Ende der Fluidleitung abgezogen werden. Der äußere Querschnittsbereich wird nach dem Durchtrennen von der Zwischenschicht abgezogen. Die Zwischenschicht wird von dem inneren Querschnittsbereich entfernt, aufgrund ihrer geringen Stabilität gegenüber der des inneren Querschnittsbereichs. Sobald die Zwischenschicht entfernt ist, liegen die Enden der Heizleiteranordnung frei und können kontaktiert werden.

Die WO 2010/080890 A1 offenbart eine elektrisch beheizte, flexible Flüssigkeitsleitung mit einem länglichen flexiblen Rohrkörper, der eine elektrische Widerstandsheizeinrichtung umfasst. Diese umgibt den Flüssigkeitsströmungsweg. In einer Ausführungsvariante sind Wärme erzeugende elektrische Strömungswege durch einen elektrisch leitenden Draht in dem Rohrkörper gebildet, der um den Flüssigkeitsströmungsweg herum gelegt ist, um an zahlreichen Stellen zwei elektrische Versorgungsleitungen zu kreuzen. In einer anderen Ausführungsvariante enthält der Wärme erzeugende elektrische Strömungsweg eine Schicht aus elektrisch leitfähigen Polymeren innerhalb des Rohrkörpers, den Flüssigkeitsströmungsweg umgebend. Entweder besteht der gesamte Rohrkörper aus elektrisch leitfähigen Polymeren oder die Polymerschicht ist zwischen zwei elektrisch nicht leitfähigen Schichten angeordnet. Die elektrischen Versorgungsleitungen sind über elektrische Anschlüsse an eine elektrische Energiequelle angeschlossen, wobei die elektrischen Anschlüsse an demselben Ende des Rohrkörpers, an einander gegenüberliegenden Enden oder entlang dem Rohrkörper angeordnet sind.

Die DE 20 2005 004 602 U1 offenbart eine beheizbare Flüssigkeitsleitung mit in dem Mantel der Flüssigkeitsleitung eingebetteten elektrischen Leitungen. Hierbei bildet ein flüssigkeitsdurchflossener Kunststoffschlauch eine innerste Schicht, die von einer mittleren Schicht aus einem elektrisch leitfähigen Polymer mit positiver Temperaturcharakteristik des elektrischen Widerstandes und darin eingebetteten elektrischen Leitungen umgeben ist, wobei eine äußere Schicht aus einem Isoliermaterial die Leitung auf der Außenseite umgibt. Die mittlere Schicht ist als ein thermoplastisches Polymer mit elektrisch leitfähigen Partikeln in Form einer PTC-Polymerschicht offenbart, die auf die innerste Schicht aufextrudiert ist.

Die im Stand der Technik vorgeschlagenen Lösungen zum Konnektieren der Heizleiter sowie zum Verbinden mit Verbindungseinrichtungen erweist sich als recht aufwendig und können im Allgemeinen nicht automatisiert durchgeführt werden. Es ist also ein manuelles Eingreifen erforderlich, das die Herstellung teuer macht. Ferner ist es im Stand der Technik nicht vorgesehen, die Verbindungseinrichtung ebenfalls beheizbar auszulegen oder nur unter erheblichem Konnektierungsaufwand.

Der vorliegenden Erfindung liegt daher die Aufgabe zugrunde, eine Vereinfachung und Reduktion der Herstellungsschritte zum Herstellen einer konfektionierten elektrisch beheizbaren Medienleitung vorzusehen, wobei auf einfache Art und Weise auch eine Beheizung der eine Fluidverbindung mit insbesondere einem Aggregat ermöglichenden Verbindungseinrichtung möglich sein soll.

Die Aufgabe wird für eine konfektionierte elektrisch beheizbare Medienleitung nach dem Oberbegriff des Anspruchs 1 dadurch gelöst, dass der Rohrleitungsteil ein elektrisch beheizbares dreilagiges Kunststoffrohr mit einer äußeren Schicht, einer mittleren Schicht und einer inneren Schicht umfasst, wobei die mittlere Schicht des Rohrleitungsteils aus einem mit zumindest einer leitfähigen Komponente gefüllten Kunststoffmaterial besteht und der Rohrleitungsteil zumindest zwei in seiner Wandung einextrudierte elektrische Leiter oder Heizleiter aufweist, wobei die zumindest zwei elektrischen Leiter oder Heizleiter innerhalb der leitfähigen Schicht angeordnet sind, und wobei die Verbindungseinrichtung auf den Endbereich des Rohrleitungsteils durch Urformen und/oder Stoffschluss aufgefügt oder angefügt ist, und dass sich der mit der elektrisch leitfähigen Einrichtung versehene Rohrleitungsteil und die elektrisch leitfähige Einrichtung bis zum oder bis nahe an das dem Rohrleitungsteil abgewandte distale Ende der Verbindungseinrichtung oder bis nahe an, vor oder in eine in die Verbindungseinrichtung eingefügte Anschlusskontur eines Aggregats oder eines Aggregatsteckers erstreckt, um eine vollständige Beheizbarkeit der Verbindungseinrichtung zu ermöglichen, ohne zusätzliche Heizleiter auf der Außenseite der Verbindungseinrichtung.

Für ein Verfahren nach dem Oberbegriff des Anspruchs 11 wird die Aufgabe dadurch gelöst, dass ein Rohrleitungsteil mit einer dreilagigen Wandung des Rohrleitungsteils mit zumindest einer in diese integrierten elektrisch leitfähigen, als Wärme- oder Kaltleiter ausgebildeten Einrichtung gefertigt und mit zumindest einer Verbindungseinrichtung im Endbereich versehen wird, und in zumindest einem Endbereich des Rohrleitungsteils die integrierte leitfähige Einrichtung freigelegt, dauerhaft durch eine Kontaktierungseinrichtung elektrisch kontaktiert und die Kontaktierungseinrichtung zum Anschluss an eine elektrische Energiequelle auf die Außenseite des Rohrleitungsteils herausgeführt wird. Weiterbildungen der Erfindung sind in den abhängigen Ansprüchen definiert.

Dadurch wird eine konfektionierte elektrisch beheizbare Medienleitung bzw. ein Verfahren zu deren Herstellung vorgeschlagen, bei der bzw. dem es nicht mehr erforderlich ist, eine separate Beheizung der Verbindungseinrichtung vorzusehen, da sich der mit der elektrisch leitfähigen Einrichtung versehene Rohrleitungsteil bis zum oder zumindest bis nahe an das Ende der Verbindungseinrichtung oder bis nahe an, vor oder in die Anschlusskontur an einem Aggregat, z.B. einen Aggregatstecker, erstreckt. Somit ist eine vollständige Beheizbarkeit der Verbindungseinrichtung möglich, ohne hier zusätzliche Heizleiter auf der Außenseite der Verbindungseinrichtung vorsehen zu müssen.

Unter einer integrierten elektrisch leitfähigen Einrichtung werden hier in die Rohrwandung eingebettete Heizleiter ebenso wie in leitfähiges Material, das in der Rohrwandung vorgesehen ist, eingebettete elektrische Leiter verstanden. Bei eingebettetem Heizleiter ist die Wärmequelle zum Beheizen des Rohrleitungsteils der Heizleiter und bei in leitfähigem Material eingebetteten elektrischen Leitern ist die Wärmequelle das leitfähige Material, das zwischen den dann als Pole wirkenden elektrischen Leitern von elektrischem Strom durchflossen wird. Die elektrischen Leiter sind in letzterem Fall somit Kaltleiter, wohingegen die Heizleiter im ersteren Fall Wärmeleiter sind.

Vorteilhaft wird zum Erzeugen der Verbindungseinrichtung zum fluidischen Verbinden am Endbereich des Rohrleitungsteils eine Verbindungskontur durch Urformen erzeugt oder eine Verbindungskontur angefügt. Die Verbindungseinrichtung kann somit auf den Endbereich des Rohrleitungsteils durch Urformen und/oder Stoffschluss aufgefügt oder angefügt sein, insbesondere durch Umspritzen, Anspritzen, Vergießen, Laserschweißen, Reibschweißen, Kleben. Hierdurch kann die Kontur der Verbindungseinrichtung entsprechend den Kundenwünschen oder in vorgebbarer Standardform ausgebildet werden, so dass eine große Variantenvielfalt entsteht, die bei den bekannten Verfahren zur Herstellung von Medienleitungen nicht möglich ist. Ferner kann die Medienleitung in beliebigen, anwendungsabhängigen Längen ohne weiteren Zusatzaufwand hergestellt werden. Dadurch, dass keine weiteren Heizleiter insbesondere im Bereich der Verbindungseinrichtung erforderlich sind, ist es ausreichend, nur eine einzige beheizbare Komponente in Form des Rohrleitungsteils mit eingebetteter elektrisch leitfähiger Einrichtung vorzusehen. Dies kann deutlich den Materialaufwand und darüber hinaus auch die Kosten der Herstellung der Medienleitung reduzieren, da insbesondere ein ansonsten bei herkömmlichen beheizbaren Medienleitungen auftretender Verschnitt beim Crimpen von Rohrleitungsteil und Verbindungseinrichtung nicht mehr auftritt. Vielmehr wird der Rohrleitungsteil in der gewünschten Gesamtlänge der Medienleitung abgelängt und die gewünschte Verbindungskontur auf die Enden des Rohrleitungsteils aufgebracht oder aufgefügt oder an dieses so angebracht, dass die elektrisch leitfähige Einrichtung bis in, an oder zumindest vor die Anschlusskontur reicht. Hierdurch ist nicht nur die Medienleitung zwischen den Verbindungseinrichtungen, sondern sind auch diese selbst beheizbar ausgebildet.

Durch das Überdecken insbesondere auch des Kontaktierungsbereichs der freigelegten integrierten leitfähigen Einrichtung des Rohrleitungsteils mit der Verbindungseinrichtung ist problemlos ebenso eine Abdichtung des Konnektierungsbereichs möglich. Die vorteilhaft aus der durch das Urformen oder einen Stoffschluss entstandenen Verbindungskontur herausragenden Anschlusselemente, die mit der integrierten leitfähigen Einrichtung verbunden sind, können durch Aufstecken eines Anschlusssteckers oder Auffügen einer Anschlusseinrichtung, in die insbesondere ein Anschlussstecker eingesteckt werden kann, an eine elektrische Energiequelle angeschlossen werden. Vorteilhaft wird eine entsprechende Ausnehmung zum Einfügen eines solchen Anschlusssteckers oder einer Anschlusseinrichtung in der Verbindungskontur vorgesehen. Der Anschlussstecker kann in eine solche Ausnehmung insbesondere über Dichtelemente eingefügt und entsprechend die aus der Verbindungskontur herausragenden Anschlusselemente abgedichtet werden. Vorteilhaft erstreckt sich somit zumindest ein Anschlusselement von der elektrisch leitfähigen Einrichtung bis auf die Außenseite der Verbindungseinrichtung bzw. -kontur.

Anstelle des Urformen der Verbindungseinrichtung oder -kontur auf dem Endbereich des Rohrleitungsteils oder der Anbindung durch ein stoffschlüssiges Verfahren, wie Laser-, Reibschweißen oder ein anderes einen Stoffschluss erzeugendes Verfahren kann diese auch an das Ende des Rohrleitungsteils angefügt werden, sofern eine Beheizung der Verbindungseinrichtung nicht vorgesehen werden oder auf andere Art und Weise erfolgen soll.

Der Rohrleitungsteil kann ein elektrisch beheizbares mehrlagiges Kunststoffrohr sein. Hierbei kann eine mittlere Schicht des Rohrleitungsteils aus einem mit zumindest einer leitfähigen Komponente gefüllten Kunststoffmaterial bestehen, insbesondere aus einem mit Leitruß, Metallpulver oder Carbon-Nanotubes gefüllten Kunststoffmaterial. Ferner weist der Rohrleitungsteil vorteilhaft zumindest zwei einextrudierte elektrische Leiter oder Heizleiter auf, insbesondere zwei bis vier, vorzugsweise zwei. Die Leiter bzw. Heizleiter können als Drähte, Litzen und/oder nicht-isolierte Leiter ausgebildet sein. Durch das Vorsehen eines elektrisch leitfähigen Kunststoffmaterials wird die Heizwärme innerhalb des Rohrmaterials bzw. der Wandung des Rohrleitungsteils erzeugt und nicht, wie sonst im Stand der Technik z.B. der EP 1 985 908 A1 üblich, über auf der Außenseite eines Rohres angeordnete Heizleiter. Ferner ergibt sich insbesondere aufgrund der Verwendung eines mit leitfähigen Komponenten gefüllten Kunststoffmaterials eine gleichmäßige Verteilung der Heizleistung über den Umfang des Rohrleitungsteils sowie über dessen Längserstreckung hinweg. Die zumindest zwei elektrischen Leiter oder Heizleiter innerhalb der leitfähigen Schicht dienen der homogenen Verteilung der Heizleistung über den gesamten Rohrleitungsteil hinweg, wobei, wie bereits erwähnt, bei Vorsehen elektrischer Leiter diese Pole bilden, zwischen denen Strom durch das mit leitfähigen Komponenten gefüllte Kunststoffmaterial fließt.

Die elektrischen Leiter oder Heizleiter erstrecken sich vorteilhaft mit einer großen Steigung, insbesondere einer Steigung von 20 bis 150 mm, gewendelt um ein Grundrohr oder eine innere Schicht des Rohrleitungsteils zum Ermöglichen oder Erleichtern eines Formbiegens des Rohrleitungsteils. Die elektrischen Leiter oder Heizleiter sind somit um das Grundrohr herum mit einer großen Steigung gewendelt, so dass sich, im Unterschied zu dem Anordnen ohne eine solche Wendelung die Möglichkeit ergibt, den Rohrleitungsteil beliebig auch mit geringen Krümmungsradien formzubiegen und somit an den jeweiligen Einbauraum von seiner Formgebung her anzupassen.

Die integrierte elektrisch leitfähige Einrichtung, insbesondere die elektrischen Leiter oder Heizleiter, die innerhalb der Wandungen des Rohrleitungsteils angeordnet sind, können vorteilhaft durch Laserschneiden freigelegt werden. Die jeweilige Position der innerhalb der Wandung des Rohrleitungsteils angeordneten gewendelten Leiter oder Heizleiter lässt sich recht gut von der Außenseite des Rohrleitungsteils ermitteln, da bei bekannter Steigung diese Position aufgrund der am Ende des Rohrleitungsteils sichtbaren Leiter- oder Heizleiterenden ermittelt werden kann. Das Rohrleitungsteil kann somit auch ohne eine vorgegebene Ausrichtung in eine solche Laserschneidvorrichtung eingelegt und bei entsprechender Programmierung automatisch die Position der innenliegenden Leiter oder Heizleiter ermittelt und der Laser an der gewünschten Stelle positioniert werden, um die Leiter oder Heizleiter zunächst freizulegen und sodann zu kontaktieren. Ein solches Freilegen der einextrudierten Leiter oder Heizleiter mittels Laserschneidtechnik lässt sich daher sehr gut automatisieren. Dies ist bei den Verfahren des Standes der Technik, wie sie in der DE 10 2006 051 413 B4 oder der DE 10 2005 037 183 B3 offenbart sind, nicht möglich, da dabei ein Durchkontaktieren unter Zuhilfenahme einer Schelle mit isolierten Abschnitten, wobei mittels Schneiden in das Rohrmaterial eingeschnitten und durchkontaktiert wird, oder Freirubbeln unter Entfernen von endseitigen Schichten eines solchen Rohrleitungsteils erforderlich ist. Bei dem Laserschnitt wird ein Flächenstück des Materials der Rohrleitungsteil-Wandung im Bereich des Leiters oder Heizleiters entfernt. Dies kann durch Verbrennen des Materials durch den Laserstrahl erfolgen, wobei der Laserstrahl im Wesentlichen senkrecht auf die Außenfläche des Rohrleitungsteils trifft. Oder der Laserstrahl sprengt das Material aus der Wandung des Rohrleitungsteils ab, wobei der Laserstrahl tangential auf die Außenfläche des Rohrleitungsteils trifft.

Nicht nur das Freilegen der innenliegenden Leiter oder Heizleiter, sondern auch das endseitige Versehen mit der Verbindungskontur kann somit automatisiert werden, so dass auch hierüber Kosten eingespart werden können.

Nach dem Freilegen der innenliegenden integrierten leitfähigen Einrichtungen insbesondere in Form von elektrischen Leitern oder Heizleitern werden diese mit Anschlusselementen verbunden, die nach dem Versehen des Endbereichs des Rohrleitungsteils mit der Verbindungskontur auf deren Außenseite herausragen, um dort, wie bereits erwähnt, mit dem Anschlussstecker oder einer Anschlusseinrichtung verbunden zu werden. Das Kontaktieren der freigelegten elektrisch leitfähigen Einrichtung mit dem oder den Anschlusselementen kann insbesondere durch Löten, wie induktives Löten, oder Schweißen, wie Impulsschweißen, erfolgen. Grundsätzlich sind auch andere Fügeverfahren möglich.

Zum Erzeugen einer Isolationswirkung für den Rohrleitungsteil kann dieser zumindest teilweise von einem Isolations- oder Schutzrohr oder einer Umhüllung umgeben sein, wobei die Isolationswirkung durch einen isolierenden Luftspalt zwischen dem Isolations- oder Schutzrohr oder der Umhüllung und dem Rohrleitungsteil erzeugt wird oder der Rohrleitungsteil eine isolierende Schicht aufweist, insbesondere eine Isolierwirkung aufweisende äußere Schicht. Die Verbindungseinrichtung oder -kontur kann zumindest eine Aufnahmenut zur Aufnahme eines den Rohrleitungsteil umgebenden Schutz- oder Isolationsrohres oder einer Umhüllung, z.B. eines Wellrohres, umfassen. Ein solches oder eine solche wird zur Wärmeisolation vorgesehen und umgibt vorteilhaft den Rohrleitungsteil von einer Verbindungseinrichtung bis zur anderen. Um eine besonders gute Verbindung mit der Verbindungskontur vorsehen zu können, erweist es sich als vorteilhaft, eine solche Aufnahmenut zum Eingreifen des Endes des Schutz- oder Isolationsrohres oder der Umhüllung vorzusehen. Diese kann beim Vorsehen der Verbindungskontur auf dem Rohrleitungsteilendbereich direkt mit eingeformt werden. Ebenfalls ist es möglich, hier zumindest ein Dichtelement mit einzuarbeiten oder anzufügen, insbesondere eine Zweikomponentendichtung. Alternativ können jedoch auch separate Dichtelemente, wie O-Ringe, an der Verbindungseinrichtung angeordnet werden.

Der Rohrleitungsteil kann eine Wandstärke von bis zu 4 mm, insbesondere 2 bis 4 mm, insbesondere 1,5 mm oder weniger aufweisen, beispielsweise von 1 mm oder weniger. Ist weder separates Schutz- oder Isolationsrohr noch Umhüllung vorgesehen, sondern dient z.B. eine äußere Schicht des Rohrleitungsteils zugleich als Isolationseinrichtung, kann mit einer Wandstärke von 4 mm oder ggf. auch weniger eine gute Isolationswirkung erzielt werden. Ferner ist es möglich, die zumindest zwei Leiter oder Heizleiter über den Umfang des Rohrleitungsteils versetzt anzuordnen, insbesondere in einem Winkel von 10 bis 360°, vorzugsweise in einem Winkel von 180°. Der Durchmesser der elektrischen Leiter oder Heizleiter kann weniger als 0,5 mm betragen, insbesondere 0,4 mm. Die elektrischen Leiter oder Heizleiter können mit Abstand zueinander um den Rohrleitungsteil herum gewendelt oder gewickelt werden, insbesondere mit einem Abstand der Wicklungen von 20 bis 60 mm, vorzugsweise 40 mm.

Der Rohrleitungsteil kann verschiedene Schichten aufweisen, die alle aus demselben Material bestehen, wobei zumindest eine mittlere Schicht dahingehend modifiziert ist, dass sie eine elektrische Leitfähigkeit aufweist. Der Rohrleitungsteil kann beispielsweise eine innere Schicht aus einem medienresistenten elektrisch isolierenden Material aufweisen, wie insbesondere Polyvinylidenfluorid (PVDF) oder aus einem Polyamid, wie einem aliphatischen Polyamid, insbesondere PA12 oder PA11. Die innere Schicht kann eine Dicke von 0,1 bis 0,3 mm aufweisen. Grundsätzlich sind auch andere Abmessungen möglich, vor allem, wenn sich dies anwendungsspezifisch als vorteilhaft erweist. Über der inneren Schicht kann eine Zwischenschicht angeordnet sein, die insbesondere aus einem leitfähigen aliphatischen Polyamid, wie PA12 oder PA11, besteht. In die Zwischenschicht sind der oder die Leiter oder Heizleiter, insbesondere mit einem Durchmesser von 0,4 mm, eingebettet. Ebenfalls weist die Zwischenschicht beispielsweise die bereits vorstehend genannten leitfähigen Komponenten auf, wie Leitruß, Metallpulver oder Carbon-Nanotubes etc. Die Zwischenschicht ist von einer Außenschicht umgeben, die ebenfalls aus PA12, PA11 oder einem anderen Polyamid, insbesondere aliphatischen Polyamid, bestehen kann. Die Außenschicht ist vorteilhaft eine nicht thermische, nicht elektrisch leitende oder isolierende Schicht, die jedoch laserbearbeitungsfähig ist, wobei diese das Schutz- oder Isolationsrohr oder die Umhüllung im Hinblick auf die Isolationswirkung ersetzen kann. Die Außenschicht kann entsprechend eine Dicke von insbesondere 0,4 mm oder mehr aufweisen. Zwischen der Zwischenschicht und der Außenschicht und/oder zwischen der Zwischenschicht und der inneren Schicht kann ferner eine Sperrschicht vorgesehen sein, die bei der Laserbearbeitung zum Freilegen der elektrischen Leiter oder Heizleiter davor schützt, dass bei der Laserbearbeitung eine Perforation insbesondere der inneren Schicht stattfindet, wodurch ein Austritt von innerhalb des Rohrleitungsteils strömendem Medium zu befürchten wäre.

Die konfektionierte elektrisch beheizbare Medienleitung ermöglicht aufgrund der vollständig von dem distalen Ende der einen endseitigen Verbindungseinrichtung zu dem distalen Ende der anderen Verbindungseinrichtung durchgehenden elektrisch leitfähigen Einrichtung eine geringe Leistungsaufnahme und einen hohen Wirkungsgrad, da keine weiteren Konnektierungen bis auf den Anschluss einer elektrischen Energiequelle an die elektrisch leitfähige Einrichtung der Medienleitung erforderlich ist. Der hohe Wirkungsgrad liegt insbesondere auch darin begründet, dass der Rohrleitungsteil über seinen gesamten Umfang hinweg beheizt wird und somit eine gleichmäßige Verteilung der Heizleistung über den Umfang des Rohrleitungsteils hinweg ermöglicht.

Zur näheren Erläuterung der Erfindung werden im Folgenden Ausführungsbeispiele von dieser anhand der Zeichnungen beschrieben. Diese zeigen in:
- Figur 1: eine seitliche Schnittansicht als Prinzipskizze einer ersten Ausführungsform einer erfindungsgemäßen konfektionierten elektrisch beheizbaren Medienleitung,
- Figur 2: eine Querschnittsansicht durch einen Rohrleitungsteil einer erfindungsgemäßen Medienleitung, wobei die Leiter oder Heizleiter in einem Winkel von 180 ° zueinander angeordnet sind,
- Figur 3: eine schematische Detailansicht einer weiteren Ausführungsform einer erfindungsgemäßen konfektionierten elektrisch beheizbaren Medienleitung im Bereich einer endseitigen Verbindungseinrichtung der Medienleitung,
- Figur 3a: eine Detailansicht der Verbindungseinrichtung mit eingefügter Anschlusskontur bzw. Aggregatstecker, und
- Figur 4: eine schematische seitliche Schnittansicht des Details einer anderen Ausführungsform einer Verbindungseinrichtung für eine erfindungsgemäße Medienleitung.

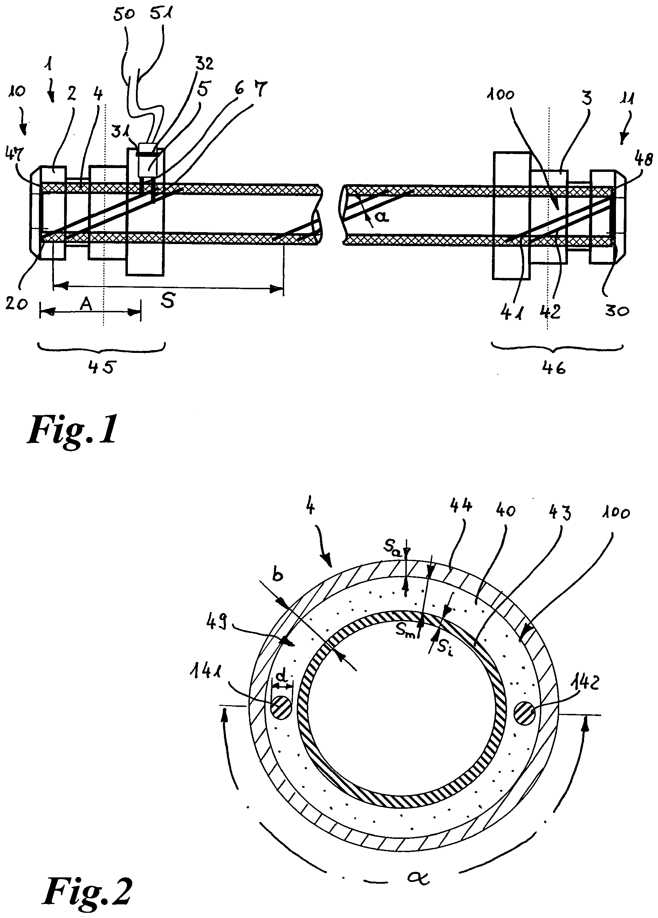

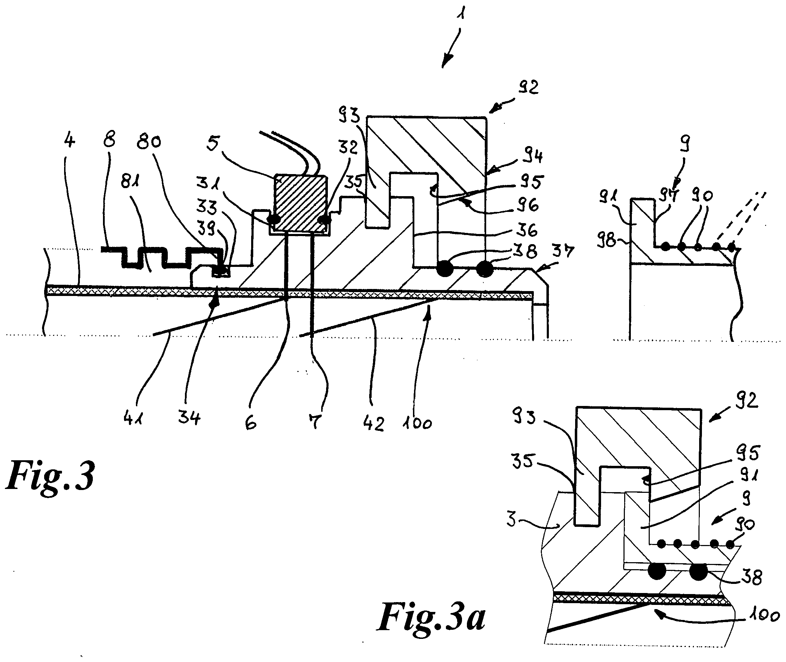

Figur 1 zeigt eine seitliche Schnittansicht einer konfektionierten elektrisch beheizbaren Medienleitung 1. Diese ist an ihren beiden Enden 10, 11 mit einer jeweiligen Verbindungseinrichtung 2, 3 versehen. Die Medienleitung 1 umfasst ferner einen Rohrleitungsteil 4. Der Rohrleitungsteil 4 ist als elektrisch beheizbares mehrlagiges Kunststoffrohr ausgebildet. Der Rohrleitungsteil 4 weist in seiner Wandung eingebettet eine elektrisch leitfähige Einrichtung 100 auf. Diese weist zwei etwa parallel zueinander geführte, sich mit großer Steigung wendelförmig entlang dem Rohrleitungsteil erstreckende Heizleiter 41, 42 (in Figur 1 angedeutet) oder Leiter 141, 142 (in Figur 2 angedeutet) auf. In Figur 3 sind lediglich die Bezugszeichen 41, 42 für die Heizleiter aufgeführt. Es ist hier jedoch zu verstehen, dass alternativ auch die Leiter 141, 142 vorgesehen sein können. Die elektrisch leitfähige Einrichtung 100 dient der Beheizung des Rohrleitungsteils 4. Bei Vorsehen der Heizleiter 41, 42 erfolgt die Erwärmung durch diese, bei Vorsehen von elektrischen Leitern 141, 142, die in elektrisch leitfähigem Kunststoff eingebettet sind, bildet der Kunststoff die Wärmequelle, da dieser zwischen den als Pole dienenden elektrischen Leitern mit elektrischem Strom durchflossen wird. Die Leiter 141, 142 können auch als Kontaktierungsleiter bezeichnet werden, wobei sie über die Länge des Rohrleitungsteils 4 hinweg wie eine Parallelschaltung von Widerständen wirken.

Wie in Figur 2 angedeutet, können sich in einer mittleren Schicht 40 weitere leitfähige Komponenten 49 befinden, um eine elektrische Leitfähigkeit vorzusehen. Das Kunststoffmaterial des Rohrleitungsteils 4 kann somit in dieser mittleren Schicht 40 mit den leitfähigen Komponenten gefüllt sein, beispielsweise mit Leitruß, Metallpulver, Carbon-Nanotubes etc. und weist die elektrisch leitfähigen Leiter 141, 142 auf. Die beiden Leiter 141, 142 in Kombination mit den leitfähigen Komponenten der mittleren Schicht 40 bei der Ausführungsform nach Figur 2 oder die Heizleiter 41, 42 nach Figur 1 führen zu einer homogenen Verteilung der Heizleistung über den gesamten Umfang des Rohrleitungsteils 4 hinweg.

Benachbart zu der mittleren Schicht 40 weist der Rohrleitungsteil eine innere Schicht 43 auf, die als Grundrohr bezeichnet werden kann, da sie als Rohrmantel ausgebildet ist. Sie weist elektrisch isolierende Eigenschaften auf, um das innerhalb des Grundrohres strömende Medium gegen die in den Leitern oder Heizleitern und den leitfähigen Komponenten fließenden Ströme der mittleren Schicht zu isolieren. Um gegenüber dem innerhalb des Grundrohres strömenden Medium, wie AdBlue^{®}, einem hochreinen Reduktionsmittel für SCR-KatalysatorSysteme (SCR=Selective Catalytic Reduction), resistent zu sein, weist die innere Schicht 43 eine entsprechende Medienresistenz auf. Beispielsweise kann sie aus Polyvinylidenfluorid oder einem aliphatischen Polyamid, insbesondere PA12, bestehen. Die Schichtdicke kann 0,1 bis 0,3 mm betragen, wobei auch andere Schichtdicken grundsätzlich möglich sind.

Der Rohrleitungsteil 4 weist ferner eine äußere Schicht 44 auf. Diese ist weder thermisch noch elektrisch leitend und kann aus einem thermisch isolierenden Material bestehen, z.B. aus PA12, also einem aliphatischen Polyamid. Der Aufbau mit den drei Schichten ist beispielhaft in Figur 2 gezeigt, die eine Querschnittsansicht durch einen Rohrleitungsteil 4 mit in einem Winkel von α = 180 ° zueinander angeordneten Leitern 141, 142 zeigt. Der Aufbau des Rohrleitungsteils 4 entspricht im Wesentlichen dem der Rohrleitungsteile 4 in den Figuren 1 und 3. Unterschiedlich zu diesen ist lediglich die Anordnung der beiden Leiter 141, 142 oder Heizleiter 41, 42 zueinander, die in den Figuren 1 und 3 in einem kleineren Winkel als α = 180 ° zueinander angeordnet sind, z.B. α = 10 ° bis 15 °.

Wie in Figur 1 weiter zu sehen, erstreckt sich der Rohrleitungsteil 4 von dem äußeren oder distalen Ende 20 der Verbindungseinrichtung 2 bis zum ebenfalls äußeren oder distalen Ende 30 der Verbindungseinrichtung 3. Somit erstreckt sich der Rohrleitungsteil 4 vollständig entlang der Medienleitung 1, so dass keine weiteren Leiter oder Heizleiter im Bereich der Verbindungseinrichtungen 2, 3 zu deren Beheizung erforderlich sind.

Zum elektrischen Anschließen der beiden Leiter 141, 142 oder Heizleiter 41, 42 an eine elektrische Energieversorgung dient ein Anschlussstecker 5 mit Anschlussleitungen 50, 51. Es kann auch ein elektrischer Steckverbinder verwendet werden, in den ein Anschlussstecker mit Anschlussleitungen eingesteckt werden kann. Ferner können Anschlussleitungen verwendet werden, die auf die Außenseite der Verbindungseinrichtung heraus- bzw. gegebenenfalls sogar bis zu einer Energiequelle hin geführt sind. Der Anschlussstecker ist aufgesteckt auf zwei Anschlusselemente 6, 7, die mit den beiden Leitern 141, 142 oder Heizleitern 41, 42 verbunden sind. Zu diesem Zweck wird Material an einer die Leiter 141, 142 oder Heizleiter 41, 42 überdeckenden Fläche des Rohrleitungsteils 4 freigelegt. Dies erfolgt beispielsweise durch Laserschneiden. Bei diesem kann der Laserstrahl das Material verbrennen, wobei er das Rohrleitungsteil 4 senkrecht oder im Wesentlichen senkrecht zu dessen Außenfläche trifft. Ferner kann der Laserschnitt dadurch erfolgen, dass der Laserstrahl Material absprengt, wobei er tangential auf der Außenfläche des Rohrleitungsteils auftrifft. Das Konnektieren der Leiter 141, 142 oder Heizleiter 41, 42 kann durch Löten oder Schweißen, insbesondere durch induktives Löten oder Impulsschweißen erfolgen. Nach dem Konnektieren der beiden Anschlusselemente 6, 7 mit den Leitern 141, 142 oder Heizleitern 41, 42 ragen die Anschlusselemente aus dem Rohrleitungsteil 4 heraus. Der Anschlussstecker 5 wird sodann auf die von der Oberfläche des Rohrleitungsteils 4 abstehenden Enden der beiden Anschlusselemente 6, 7 aufgesteckt. Zum Abdichten des Anschlusssteckers dient in der in Figur 1 gezeigten Ausführungsform ein Dichtring 32. Durch Vorsehen eines solchen Dichtelements kann eine Abdichtung einer den Anschlussstecker aufnehmenden Ausnehmung 31 bzw. der Anschlusselemente 6, 7 nach außen vorgesehen werden und somit ein Schutz gegen Eindringen von insbesondere Feuchtigkeit. Dies ist in den Figuren 1 und 3 gezeigt. Bei Herausführen von Anschlussleitungen können diese durch Einzellitzenabdichtungen nach außen abgedichtet werden, insbesondere durch Vorsehen sehr kleiner Dichtringe je Anschlussleitung.

Die beiden endseitigen Verbindungseinrichtungen 2, 3 sind in den beiden Endbereichen 45, 46 des Rohrleitungsteils 4 angeordnet. Sie sind dort als Verbindungskonturen durch Umspritzen der Endbereiche 45, 46 des Rohrleitungsteils 4 gebildet. Hierbei wird zunächst ein Freilegen der beiden Leiter 141, 142 oder Heizleiter 41, 42, dann eine Konnektierung der beiden Leiter 141, 142 oder Heizleiter 41, 42 mit den beiden Anschlusselementen 6, 7 vorgenommen und nachfolgend durch Umspritzen der beiden Endbereiche 45, 46 des Rohrleitungsteils 4 die jeweilige Verbindungskontur 2, 3 aufgebracht. Sodann wird der Anschlussstecker 5 auf die beiden Anschlusselemente 6, 7 bzw. deren vorstehende Enden aufgesteckt, um einen Anschluss an eine elektrische Energieversorgung zu ermöglichen. Die Verbindungskonturen können z.B. als Stecker, Schraub- oder Kupplungskontur ausgebildet sein.

Das Konnektieren der beiden Leiter 141, 142 oder Heizleiter 41, 42 erfolgt entsprechend dem Ausführungsbeispiel in Figur 1 lediglich im Bereich der einen Verbindungseinrichtung 2. Grundsätzlich wäre es jedoch auch möglich, sofern dies beispielsweise bei mehr als zwei Leitern oder Heizleitern gewünscht wird, eine Konnektierung der Leiter oder Heizleiter auch in der anderen Verbindungseinrichtung 3 vorzusehen. Anstelle der dargestellten geraden Formgebung der Verbindungseinrichtungen 2, 3 können diese beispielsweise auch als Y- oder T-Leitungen, strömungsoptimiert im Radius des Rohrleitungsteils 4 oder als Winkelstecker ausgebildet sein.

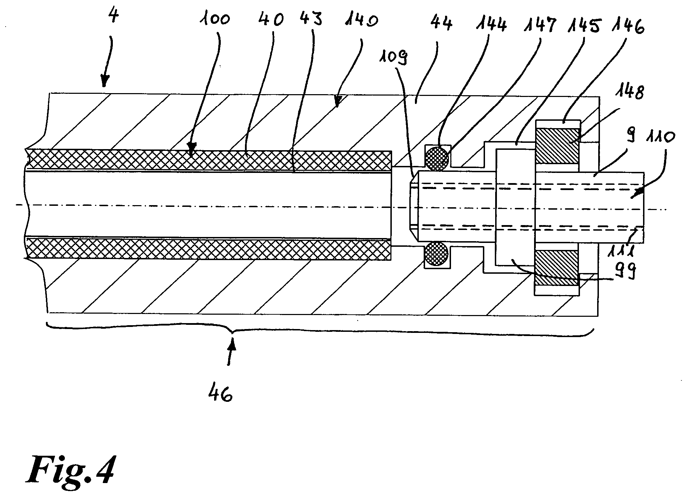

Wie in Figur 4 gezeigt, kann anstelle des Vorsehens einer separat aufgefügten Verbindungseinrichtung auch eine Verbindungsmuffe 140 ausgebildet werden. Diese ist durch Aufweiten des Endbereichs 45 bzw. 46 gebildet. In dem in Figur 4 gezeigten Beispiel ist die äußere Schicht 44 zumindest in dem Endbereich 46 mit einer größeren Wandstärke versehen. Auf der Innenseite der äußeren Schicht 44 ist diese mit Ausnehmungen 144, 145, 146 zum Einfügen eines Dichtrings 147 sowie einer Anschlusskontur 9 an einem Aggregat bzw. eines Aggregatsteckers und einer Halteeinrichtung 148 zum Verriegeln von dieser oder diesem in der Verbindungsmuffe 140 versehen. Zum Verriegeln der Anschlusskontur oder des Anschlusssteckers in der Verbindungsmuffe 140 weist die Anschlusskontur oder der Anschlussstecker einen auskragenden Teilbereich 99 auf, der von der Halteeinrichtung 148 hintergriffen wird. Die Halteeinrichtung kann beispielsweise als rückfedernder Ring ausgebildet sein und kann, ähnlich wie der in Figur 3 gezeigte Axialclip 92 eine schräge oder angefaste Fläche aufweisen, um ein leichteres Einführen des Anschlusssteckers bzw. der Anschlusskontur zu ermöglichen.

Das frontseitige oder proximale Ende 109 der Anschlusskontur 9 ragt sehr nahe bis an die elektrisch leitfähige Einrichtung 100 heran, kann ggf. sogar konzentrisch zu dieser angeordnet werden durch Eingreifen in den entsprechenden endseitigen Abschnitt der diese enthaltenden Schicht des Rohrleitungsteils 4. Im Unterschied zu den Ausführungsformen in den Figuren 1 und 3 enden bei der in Figur 4 gezeigten Ausführungsform die einzelnen Schichten des Rohrleitungsteils nicht in einer Ebene, sondern erstreckt sich die äußere Schicht 44 über die innere 43 und die mittlere Schicht 40 hinaus.

Außer der Verbindungsmuffe kann eine Wärmeleithülse 111 für die Anschlusskontur 9 vorgesehen sein. Sie wird in den Fluidkanal 110 der Anschlusskontur 9 eingefügt und steht somit in direktem Kontakt mit dem Medium bzw. Fluid, das durch die Medienleitung 1 und die Anschlusskontur 9 strömt. Um eine Korrosion hierbei zu vermeiden, insbesondere beim Durchströmen von AdBlue^{®}, besteht die Wärmeleithülse 111 vorteilhaft aus Edelstahl oder Aluminium. Die Wärmeleithülse 111 wird durch das Medium bzw. Fluid im Bereich der (unbeheizten) Verbindungsmuffe 140 temperiert. Die Wärme kann dadurch zwischen den beheizten Bereichen von Rohrleitungsteil 4 mit Verbindungsmuffe 140 und Anschlusskontur 9 mit Rohrleitungsteil besser übertragen werden. Bei einer elektrischen Beheizung dieser Bereiche wirkt die Wärmeleithülse 111 zumindest unterstützend durch ihre Wärmeleitfähigkeit.

Wie der Detailansicht der Medienleitung 1 in einer alternativen Ausführungsvariante in Figur 3 zu entnehmen, kann die Verbindungskontur auch noch eine andere Formgebung aufweisen. Die Formgebung kann an den jeweiligen Anwendungsfall angepasst werden, wobei auch übliche SAE-Steckerformgebungen gewählt werden können.

Die Verbindungseinrichtung bzw. -kontur gemäß Figur 3 weist eine Ausnehmung 31 zum Einfügen des Anschlusssteckers 5 auf. Diese ist innerhalb der eingeformten Ausnehmung 31 über ein dichtendes Element, hier einen Dichtring 32, wie einen O-Ring abgedichtet. Deutlich erkennbar sind in Figur 3 auch die beiden Anschlusselemente 6, 7, die einerseits mit den beiden Leiter 141, 142 oder Heizleitern 41, 42 verbunden sind und andererseits durch die Verbindungskontur hindurch in die Ausnehmung 31 hineinragen.

Die Verbindungskontur ist ferner mit einer Aufnahmenut 33 im endseitigen Bereich 34, der in Richtung eines Schutz- oder Isolationsrohres, veranschaulicht durch ein Wellrohr 8, gerichtet ist, versehen. Die Aufnahmenut 33 dient dem Einfügen eines endseitig nach innen ragenden Kragens 80 des Wellrohres 8. Das Wellrohr 8 bzw. der Isolationsspalt 81 zwischen dem Wellrohr 8 und dem Rohrleitungsteil 4 dient der Isolation des zwischen den beiden Verbindungseinrichtungen 2, 3 angeordneten Teilstücks des Rohrleitungsteils 4. Durch das Vorsehen der Aufnahmenut 33 kann der umlaufende Kragen 80 des Wellrohres 8 dort eingreifen und verrastet werden, so dass ein gewolltes Lösen des Wellrohres hierüber vermieden werden kann. In der Aufnahmenut 33 ist eine Dichtung 39 angeordnet, um ein Eindringen von Feuchtigkeit in den Zwischenraum zwischen Wellrohr 8 und Rohrleitungsteil 4, also den Isolationsspalt 81, zu vermeiden. Beispielsweise kann dort ein O-Ring vorgesehen werden oder eine Zweikomponentendichtung. Die Zweikomponentendichtung kann direkt mit an die Verbindungskontur angespritzt werden. Dasselbe gilt grundsätzlich auch für den Dichtring 32, der den Anschlussstecker 5 innerhalb der Ausnehmung 31 abdichtet. Auch dieser kann direkt bei der Herstellung der Verbindungseinrichtung angespritzt werden.

Wie Figur 3 weiter entnommen werden kann, ist zum Verbinden der Verbindungseinrichtung 3 mit einer Anschlusskontur 9 an einem Aggregat, insbesondere einem Aggregatstecker zum Anschließen der Medienleitung an ein Aggregat die Kontur der Verbindungseinrichtung 3 im Endbereich entsprechend verjüngt bzw. mit einem geringeren Durchmesser versehen als beispielsweise in dem Bereich, in dem die Ausnehmung 31 zur Aufnahme des Anschlusssteckers 5 angeordnet ist. Die Anschlusskontur 9 weist in der in Figur 3 gezeigten Ausführungsvariante eine Anschlussbeheizung aggregatseitig auf, die durch die angedeuteten Heizleiter 90 veranschaulicht ist. Ferner weist die Anschlusskontur 9 einen auskragenden vorderen Flansch 91 auf. Dieser dient zum Befestigen und Arretieren der Anschlusskontur 9 an der Verbindungseinrichtung 3. Zum Festlegen der Anschlusskontur 9 im Bereich des Flansches 91 dient ein Axialclip 92. Dieser weist einen umlaufenden nach innen gerichteten Kragen 93 auf, der in eine entsprechende Aufnahmenut 35 der Verbindungseinrichtung 3 eingreift. Die Aufnahmenut 35 wird bei dem Spritzen der Verbindungseinrichtung 3 direkt mit eingeformt und dient dem axialen Halt des Axialclips 92 an der Verbindungseinrichtung 3.

Zum Hintergreifen des Flansches 91 dient eine Haltekontur 94 des Axialclips 92. Diese weist zum einen eine Haltefläche 95 auf, die etwa parallel zu den Seitenwandungen des Kragens 93 angeordnet ist. Zum anderen weist die Haltekontur 94 eine schräg verlaufende konisch zulaufende oder angefaste Fläche 96 auf. Der konische Abschnitt des Axialclips 92 weist eine größere Öffnung in Richtung nach außen und eine kleinere Öffnung in Richtung nach innen, also in Richtung der Haltefläche 95 auf. Beim Einfügen des Flansches 91 in den Axialclip 92 kann dieser bei Angreifen an der angefasten Fläche 96 zunächst nach außen ausweichen und sich dann klemmend mit seiner Haltefläche 95 an dem Flansch 91 an dessen Seitenfläche 97 anlegen, so dass dieser an einer Haltefläche 36 der Stecker- oder Kupplungskontur mit seiner anderen Seitenfläche 98 anliegt und zwischen der Haltefläche 36 und der Haltefläche 95 aufgenommen und verrastet wird. Der zusammengefügte Zustand von Axialclip und Anschlusskontur 9 ist in Figur 3a gezeigt.

Zum Abdichten der Anschlusskontur 9 sind entsprechend auf den Anschlussteil 37 der Verbindungseinrichtung 3 zwei Dichtungen in Form von Dichtringen 38, z.B. O-Ringen, aufgefügt. Grundsätzlich ist es auch möglich, hier bereits beim Spritzvorgang zur Herstellung der Verbindungseinrichtung 3 Dichtungen mit einzuformen.

Der Rohrleitungsteil 4 kann als elektrisch beheizbares mehrlagiges Kunststoffrohr als sog. MLT-Rohr (Multi Layer Technique) ausgebildet werden. Wie bereits vorstehend erwähnt, können für alle drei Schichten 40, 43, 44 Polyamide verwendet werden, insbesondere PA12 oder PA11. Die innere Schicht 43, wie sie insbesondere Figur 2 entnommen werden kann, weist beispielsweise eine Schichtdicke sᵢ von 0,1 bis 0,3 mm auf, die äußere Schicht 44, wie sie in Figur 2 ebenfalls zu sehen ist, beispielsweise eine Schichtdicke sₐ von 0,4 mm. Die äußere Schicht 44 ist laserbearbeitungsfähig, um die Leiter 141, 142 oder Heizleiter 41, 42 freilegen zu können bzw. Komponenten der Verbindungseinrichtung auch per Laserschweißverfahren anbringen zu können. Die mittlere Schicht 40 kann eine Schichtdicke sₘ von 0,3 bis 1,0 mm aufweisen.

Um insbesondere eine Beschädigung der inneren Schicht 43 zu vermeiden, kann zwischen der mittleren Schicht 40 und der inneren Schicht 43 eine Sperrschicht vorgesehen werden, die in Figur 2 nicht gezeigt ist. Ebenfalls ist es möglich, zwischen der äußeren Schicht 44 und der mittleren Schicht 40 eine Sperrschicht vorzusehen, um auch diese in der Umgebung der Leiter 141, 142 oder Heizleiter 41, 42 gegen eine Beschädigung bei dem Freilegen von diesen zu schützen. Im Bereich der beiden Leiter oder Heizleiter sollte auch bei Vorsehen einer Sperrschicht ein Entfernen von dieser grundsätzlich möglich sein, um die Konnektierung der Leiter oder Heizleiter 41, 42 mit den Anschlusselementen 6, 7 zu ermöglichen. Ist die Sperrschicht zwischen der äußeren und der mittleren Schicht vorgesehen, kann die äußere Schicht bis zur Sperrschicht durch Laserschneiden entfernt werden und nachfolgend die Sperrschicht auf mechanischem Wege, um eine Kontaktierung der Leiter oder Heizleiter vornehmen zu können.

Die Leiter oder Heizleiter selbst können beispielsweise einen Durchmesser von d = 0,4 mm aufweisen. Wie in Figur 2 zu sehen, können zwei Leiter oder Heizleiter vorgesehen werden. Jedoch ist es ebenfalls möglich, mehr, beispielsweise vier Leiter oder Heizleiter vorzusehen. Die beiden in Figur 2 gezeigten Leiter oder Heizleiter weisen einen Winkel zueinander von α = 180° auf. Sie können jedoch auch einen beliebigen anderen Winkel zwischen 10° und 360° zueinander aufweisen. Der Abstand a der beiden Leiter oder Heizleiter 41, 42 voneinander bzw. der Wicklungen der beiden Leiter oder Heizleiter voneinander kann 20 bis 60 mm betragen, insbesondere 40 mm. Die Steigung S der beiden Leiter oder Heizleiter ist vergleichsweise groß und kann 20 bis 150 mm betragen, insbesondere 40 bis 80 mm. Die Gesamtwandstärke b des Rohrleitungsteils 4 beträgt insbesondere 4 mm oder weniger, z.B. 2 mm oder weniger, z.B. 1,5 mm oder weniger, z.B. 1,0 mm oder weniger.

Die Ermittlung der Stellen, an denen der Laserschnitt erfolgen soll, ergibt sich dadurch, dass man auf zumindest einer der Frontflächen 47, 48 der beiden Enden des Rohrleitungsteils 4 die Position der beiden Leiter oder Heizleiter kennt und insbesondere auch deren Steigung S, so dass unabhängig von der tatsächlichen Positionierung des Rohrleitungsteils 4 in einer Laserschneidvorrichtung bzw. einer Vorrichtung zum Herstellen der Medienleitung 1 ohne Weiteres die korrekte Position für den Laser und somit den Laserschnitt gefunden werden kann. Hierbei wird ausgehend von der Position der Leiter 141, 142 oder Heizleiter 41, 42 in der Frontfläche 47 bzw. 48 in Kenntnis der Steigung S sowie des Abstands A der Konnektierungsstelle von der Frontfläche die Position der Leiter oder Heizleiter ermittelt. Hierdurch ist es vorteilhaft möglich, die Herstellung der Medienleitung zu automatisieren, also manuelle Eingriffe zu vermeiden, da die Positionsermittlung der Konnektierungsstelle sowie der Laserschnitt rechnergesteuert erfolgen können.

Der aus der Extrusionsanlage kommende Rohrleitungsteil 4 wird bei der Herstellung der Medienleitung 1 in eine Laserschneidvorrichtung eingelegt, durch Laserschneiden die beiden in die Wandung des Rohrleitungsteils eingebetteten Leiter 141, 142 oder Heizleiter 41, 42 freigelegt und elektrisch mit den Anschlusselementen 6, 7 konnektiert. Nachfolgend wird in einer Kunststoffspritzvorrichtung an beiden Enden des Rohrleitungsteils 4 in den Endbereichen 45, 46 eine jeweilige Stecker- oder Kupplungskontur zum Erzeugen der beiden Verbindungseinrichtungen 2, 3 aufgespritzt oder in anderer Weise aufgebracht durch Urformen oder Stoffschluss. Um eine dichte Montage von Anschlussstecker 5, Wellrohr 8 sowie Anschlusskontur 9 zu ermöglichen, können ferner nachfolgend O-Ringe oder andere Dichtelemente an den entsprechend dafür vorgesehenen Stellen auf die Verbindungseinrichtung 2, 3 aufgefügt werden. Ebenfalls ist ein Einformen solcher Dichtelemente beim Kunststoffspritzvorgang bzw. beim Herstellen der Verbindungseinrichtung 2, 3 möglich.

Neben den im Vorstehenden beschriebenen und in den Figuren gezeigten Ausführungsvarianten von konfektionierten elektrisch beheizbaren Medienleitungen sind noch zahlreiche weitere möglich, bei denen jeweils der Rohrleitungsteil und die elektrisch leitfähige Einrichtung sich bis zum oder zumindest bis nahe an das dem Rohrleitungsteil abgewandte Ende der Verbindungseinrichtung oder bis nahe an, vor oder in eine Anschlusskontur erstrecken bzw. in zumindest einem Endbereich des Rohrleitungsteils die integrierte elektrisch leitfähige Einrichtung freigelegt, dauerhaft durch eine Kontaktierungseinrichtung elektrisch kontaktiert und die Kontaktierungseinrichtung zum Anschluss an eine elektrische Energiequelle auf die Außenseite des Rohrleitungsteils herausgeführt wird. Insbesondere können die Endbereiche des Rohrleitungsteils nach dem Freilegen der in dessen Wandung eingebetteten elektrisch leitfähigen Einrichtung mit Verbindungskonturen versehen werden.

### Bezugszeichenliste

- 1: Konfektionierte elektrisch beheizbare Medienleitung
- 2: Verbindungseinrichtung
- 3: Verbindungseinrichtung
- 4: Rohrleitungsteil
- 5: Anschlussstecker
- 6: Anschlusselement
- 7: Anschlusselement
- 8: Wellrohr
- 9: Anschlusskontur
- 10: erstes Ende der Medienleitung
- 11: zweites Ende der Medienleitung
- 20: äußeres/distales Ende
- 30: äußeres/distales Ende
- 31: Ausnehmung
- 32: Dichtring
- 33: Aufnahmenut
- 34: endseitiger Bereich
- 35: Aufnahmenut
- 36: Haltefläche
- 37: Anschlussteil
- 38: O-Ring-Dichtung
- 39: Dichtung
- 40: Mittlere Schicht
- 41: Heizleiter
- 42: Heizleiter
- 43: Innere Schicht
- 44: Äußere Schicht
- 45: Endbereich
- 46: Endbereich
- 47: erste Frontfläche
- 48: zweite Frontfläche
- 49: leitfähige Komponente
- 50: Leitung
- 51: Leitung
- 80: umlaufender Kragen
- 81: Isolationsspalt
- 90: Heizleiter
- 91: Flansch
- 92: Axialclip
- 93: Kragen
- 94: Haltekontur
- 95: Haltefläche
- 96: angefaste Fläche
- 97: Seitenfläche
- 98: Seitenfläche
- 99: auskragender Teilbereich
- 100: elektrisch leitfähige Einrichtung
- 109: frontseitiges Ende von 9
- 110: Fluidkanal
- 111: Wäremeleithülse
- 140: Verbindungsmuffe
- 141: elektrischer Leiter
- 142: elektrischer Leiter
- 144: Ausnehmung
- 145: Ausnehmung
- 146: Ausnehmung
- 147: Dichtring
- 148: Halteeinrichtung
- a: Abstand Wicklungen Leiter oder Heizleiter
- α: Winkel der Leiter oder Heizleiter zueinander
- A: Abstand zur Konnektierungsstelle
- b: Wandstärke des Rohrleitungsteils
- d: Durchmesser Leiter oder Heizleiter
- S: Steigung
- sₐ: Schichtdicke äußere Schicht
- sᵢ: Schichtdicke innere Schicht
- sₘ: Schichtdicke mittlere Schicht

## Patentansprüche

1. Konfektionierte elektrisch beheizbare Medienleitung (1) mit zumindest einem Rohrleitungsteil (4) mit einer Wandung des Rohrleitungsteils mit in diese integrierter elektrisch leitfähiger, als Wärmeleiter oder Kaltleiter ausgebildeter Einrichtung (100) und mit zumindest einer Verbindungseinrichtung (2, 3,140), die eine Stecker-, Schraub- oder Kupplungseinrichtung ist, im Endbereich (45,46) des Rohrleitungsteils (4) zum fluidischen Verbinden der Medienleitung (1),
**dadurch gekennzeichnet, dass**
der Rohrleitungsteil (4) ein elektrisch beheizbares dreilagiges Kunststoffrohr mit einer äußeren Schicht, einer mittleren Schicht und einer inneren Schicht umfasst, wobei die mittlere Schicht (40) des Rohrleitungsteils (4) aus einem mit zumindest einer leitfähigen Komponente gefüllten Kunststoffmaterial besteht und der Rohrleitungsteil (4) zumindest zwei in seiner Wandung einextrudierte elektrische Leiter (141,142) oder Heizleiter (41, 42) aufweist, wobei die zumindest zwei elektrischen Leiter (141,142) oder Heizleiter (41, 42) innerhalb der leitfähigen Schicht (40) angeordnet sind, und wobei die Verbindungseinrichtung (2, 3) auf den Endbereich (45, 46) des Rohrleitungsteils durch Urformen und/oder Stoffschluss aufgefügt oder angefügt ist, und dass sich der mit der elektrisch leitfähigen Einrichtung (100) versehene Rohrleitungsteil (4) und die elektrisch leitfähige Einrichtung (100) bis zum oder bis nahe an das dem Rohrleitungsteil (4) abgewandte distale Ende (20, 30) der Verbindungseinrichtung (2, 3) oder bis nahe an, vor oder in eine in die Verbindungseinrichtung (140) eingefügte Anschlusskontur (9) eines Aggregats oder eines Aggregatsteckers erstreckt, um eine vollständige Beheizbarkeit der Verbindungseinrichtung zu ermöglichen, ohne zusätzliche Heizleiter auf der Außenseite der Verbindungseinrichtung.

2. Konfektionierte elektrisch beheizbare Medienleitung (1) nach Anspruch 1,
**dadurch gekennzeichnet, dass**
zumindest ein Anschlusselement (6, 7) sich von der elektrisch leitfähigen Einrichtung (100) bis auf die Außenseite der Verbindungseinrichtung (2, 3) erstreckt.

3. Konfektionierte elektrisch leitfähige Medienleitung (1) nach Anspruch 1 oder 2,
**dadurch gekennzeichnet, dass**
die Verbindungseinrichtung (2, 3) auf den Endbereich (45, 46) des Rohrleitungsteils durch Umspritzen, Anspritzen, Vergießen, Laserschweißen, Reibschweißen, Kleben aufgefügt oder angefügt ist.

4. Konfektionierte elektrisch beheizbare Medienleitung (1) nach einem der Ansprüche 1 bis 3,
**dadurch gekennzeichnet, dass**
eine mittlere Schicht (40) des Rohrleitungsteils (4) aus einem mit Leitruß, Metallpulver oder Carbon-Nanotubes gefüllten Kunststoffmaterial besteht.

5. Konfektionierte elektrisch beheizbare Medienleitung (1) nach Anspruch 4,
**dadurch gekennzeichnet, dass**
der Rohrleitungsteil (4) zwei bis vier, insbesondere zwei elektrische Leiter (141, 142) oder Heizleiter (41, 42), insbesondere Drähte, Litzen und/oder nicht-isolierte Leiter aufweist.

6. Konfektionierte elektrisch beheizbare Medienleitung (1) nach einem der vorstehenden Ansprüche,
**dadurch gekennzeichnet, dass**
die elektrischen Leiter (141, 142) oder Heizleiter (41, 42) mit einer großen Steigung (S), insbesondere einer Steigung (S) von 20 bis 150 mm, um ein Grundrohr oder eine innere Schicht (43) des Rohrleitungsteils (4) herum gewendelt sind zum Ermöglichen oder Erleichtern eines Formbiegens des Rohrleitungsteils (4).

7. Konfektionierte elektrisch beheizbare Medienleitung (1) nach einem der vorstehenden Ansprüche,
**dadurch gekennzeichnet, dass**
zum Erzeugen einer Isolationswirkung für den Rohrleitungsteil (4) ein isolierender Luftspalt (81) zwischen einem diesen zumindest teilweise umgebenden Isolations- oder Schutzrohr (8) oder Umhüllung und dem Rohrleitungsteil (4) vorgesehen ist oder der Rohrleitungsteil (4) eine isolierende Schicht aufweist, insbesondere eine Isolierwirkung aufweisende äußere Schicht (44).

8. Konfektionierte elektrisch beheizbare Medienleitung (1) nach einem der vorstehenden Ansprüche,
**dadurch gekennzeichnet, dass**
die Verbindungseinrichtung (2, 3) zumindest eine Aufnahmenut (33) zur Aufnahme eines Endes (80) eines den Rohrleitungsteil (4) umgebenden Schutz- oder Isolationsrohres oder einer Umhüllung (8) umfasst.

9. Konfektionierte elektrisch beheizbare Medienleitung (1) nach einem der vorstehenden Ansprüche,
**dadurch gekennzeichnet, dass**
zumindest eine Dichteinrichtung in oder an die Verbindungseinrichtung (2, 3) ein- oder angeformt, insbesondere an- oder eingespritzt ist.

10. Konfektionierte elektrisch beheizbare Medienleitung (1) nach einem der vorstehenden Ansprüche,
**dadurch gekennzeichnet, dass**
der Rohrleitungsteil (4) eine Wandstärke (b) von 4 mm oder weniger aufweist, insbesondere von 1 mm oder weniger und/oder der Winkel (α) zwischen zwei elektrischen Leitern (141, 142) oder Heizleitern (41, 42) 10 bis 360°, insbesondere 180°, beträgt und/oder der Durchmesser (d) der elektrischen Leiter (141, 142) oder Heizleiter (41, 42) weniger als 0,5 mm, insbesondere 0,4 mm, beträgt und/oder der Abstand (a) der Wicklungen der elektrischen Leiter (141, 142) oder Heizleiter (41,42) 20 bis 60 mm, insbesondere 40 mm, beträgt.

11. Verfahren zum Herstellen einer Medienleitung (1) nach einem der vorstehenden Ansprüche,
**dadurch gekennzeichnet, dass**
- ein Rohrleitungsteil (4) mit einer dreilagigen Wandung des Rohrleitungsteils mit zumindest einer in diese integrierten elektrisch leitfähigen, als Wärme- oder Kaltleiter ausgebildeten Einrichtung (100) gefertigt und mit zumindest einer Verbindungseinrichtung (2,3,140) im Endbereich versehen wird, und
- in zumindest einem Endbereich (45, 46) des Rohrleitungsteils (4) die integrierte elektrisch leitfähige Einrichtung (100) freigelegt, dauerhaft durch eine Kontaktierungseinrichtung (6, 7) elektrisch kontaktiert und die Kontaktierungseinrichtung (6, 7) zum Anschluss an eine elektrische Energiequelle auf die Außenseite des Rohrleitungsteils (4) herausgeführt wird.

12. Verfahren nach Anspruch 11,
**dadurch gekennzeichnet, dass**
zum Erzeugen einer Verbindungseinrichtung (2, 3) zum fluidischen Verbinden am Endbereich (45, 46) des Rohrleitungsteils (4) eine Verbindungskontur durch Urformen erzeugt oder eine Verbindungskontur angefügt wird.

13. Verfahren nach Anspruch 11 oder 12,
**dadurch gekennzeichnet, dass**
die integrierte elektrisch leitfähige Einrichtung (100), insbesondere zumindest ein elektrischer Leiter (141, 142) oder Heizleiter (41, 42), durch Laserschneiden freigelegt wird.

14. Verfahren nach Anspruch 11, 12 oder 13,
**dadurch gekennzeichnet, dass**
die Kontaktierung der integrierten elektrisch leitfähigen Einrichtung (100) mit zumindest einem Anschlusselement (6, 7) durch induktives Löten oder Impulsschweißen erfolgt.

## Claims

1. Prefabricated electrically heatable media line (1) having at least one pipeline part (4) with a wall of the pipeline part with an electrically conductive device (100) in the form of a heat conductor or PTC resistor integrated therein and having at least one connection device (2, 3, 140), which is a plug, screw or coupling device, in the end region (45, 46) of the pipeline part (4) for the fluidic connection of the media line (1),
**characterised in that**
the pipeline part (4) comprises an electrically heatable three-ply plastics pipe with an outer layer, a middle layer and an inner layer, wherein the middle layer (40) of the pipeline part (4) consists of a plastics material filled with at least one conductive component and the pipeline part (4) has at least two electrical conductors (141, 142) or heating conductors (41, 42) extruded into its wall, wherein the at least two electrical conductors (141, 142) or heating conductors (41, 42) are arranged within the conductive layer (40), and wherein the connection device (2, 3) is attached on or to the end region (45, 46) of the pipeline part by primary shaping and/or material bonding, and **in that** the pipeline part (4) provided with the electrically conductive device (100) and the electrically conductive device (100) extend as far as or close to the distal end (20, 30), remote from the pipeline part (4), of the connection device (2, 3) or close to, in front of or into a connecting contour (9), inserted into the connection device (140), of a unit or of a unit plug in order to allow the connection device to be heated fully without additional heating conductors on the outer side of the connection device.

2. Prefabricated electrically heatable media line (1) according to claim 1,
**characterised in that**
at least one connecting element (6, 7) extends from the electrically conductive device (100) to the outer side of the connection device (2, 3).

3. Prefabricated electrically heatable media line (1) according to claim 1 or 2,
**characterised in that**
the connection device (2, 3) is joined to or on the end region (45, 46) of the pipeline part by overmoulding, moulding-on, casting, laser welding, friction welding, adhesive bonding.

4. Prefabricated electrically heatable media line (1) according to any one of claims 1 to 3,
**characterised in that**
a middle layer (40) of the pipeline part (4) consists of a plastics material filled with conductive carbon black, metal powder or carbon nanotubes.

5. Prefabricated electrically heatable media line (1) according to claim 4,
**characterised in that**
the pipeline part (4) has from two to four, in particular two, electrical conductors (141, 142) or heating conductors (41, 42), in particular wires, litz wires and/or non-insulated conductors.

6. Prefabricated electrically heatable media line (1) according to any one of the preceding claims,
**characterised in that**
the electrical conductors (141, 142) or heating conductors (41, 42) are wound around a base pipe or an inner layer (43) of the pipeline part (4) with a large pitch (S), in particular a pitch (S) of from 20 to 150 mm, in order to permit or facilitate bending of the pipeline part (4).

7. Prefabricated electrically heatable media line (1) according to any one of the preceding claims,
**characterised in that**
in order to generate an insulating action for the pipeline part (4), an insulating air gap (81) is provided between an insulating or protective pipe (8) or jacket which at least partially surrounds the pipeline part (4) and the pipeline part (4), or the pipeline part (4) has an insulating layer, in particular an outer layer (44) having an insulating action.

8. Prefabricated electrically heatable media line (1) according to any one of the preceding claims,
**characterised in that**
the connection device (2, 3) comprises at least one receiving groove (33) for receiving an end (80) of a protective or insulating pipe or jacket (8) surrounding the pipeline part (4).

9. Prefabricated electrically heatable media line (1) according to any one of the preceding claims,
**characterised in that**
at least one sealing device is formed in or on, in particular moulded onto or into, the connection device (2, 3).

10. Prefabricated electrically heatable media line (1) according to any one of the preceding claims,
**characterised in that**
the pipeline part (4) has a wall thickness (b) of 4 mm or less, in particular of 1 mm or less, and/or the angle (α) between two electrical conductors (141, 142) or heating conductors (41, 42) is from 10 to 360°, in particular 180°, and/or the diameter (d) of the electrical conductors (141, 142) or heating conductors (41, 42) is less than 0.5 mm, in particular 0.4 mm, and/or the spacing (a) of the windings of the electrical conductors (141, 142) or heating conductors (41, 42) is from 20 to 60 mm, in particular 40 mm.

11. Method for producing a media line (1) according to any one of the preceding claims,
**characterised in that**
- a pipeline part (4) with a three-ply wall of the pipeline part with at least one electrically conductive device (100) in the form of a heat conductor or PTC resistor integrated in said wall is manufactured and is provided in the end region with at least one connection device (2, 3, 140), and
- in at least one end region (45, 46) of the pipeline part (4), the integrated electrically conductive device (100) is exposed, permanently electrically contacted by a contacting device (6, 7), and the contacting device (6, 7) is guided out on the outer side of the pipeline part (4) for connection to an electrical power source.

12. Method according to claim 11,
**characterised in that**
in order to produce a connection device (2, 3) for fluidic connection at the end region (45, 46) of the pipeline part (4), a connection contour is produced by primary shaping or a connection contour is joined on.

13. Method according to claim 11 or 12,
**characterised in that**
the integrated electrically conductive device (100), in particular at least one electrical conductor (141, 142) or heating conductor (41, 42), is exposed by laser cutting.

14. Method according to claim 11, 12 or 13,
**characterised in that**
contacting of the integrated electrically conductive device (100) with at least one connecting element (6, 7) takes place by inductive soldering or pulse welding.

## Revendications

1. Conduite de fluides (1) confectionnée pouvant être chauffée électriquement avec au moins une partie de conduite tubulaire (4) avec une paroi de la partie de conduite tubulaire avec un dispositif (100) intégré dans celle-ci, électriquement conducteur et réalisé en tant que conducteur de chaleur ou conducteur de froid et avec au moins un dispositif de liaison (2, 3, 140), qui est un dispositif à fiche, à vis ou d'accouplement, dans la zone d'extrémité (45, 46) de la partie de conduite tubulaire (4) pour la liaison fluidique de la conduite de fluides (1),
**caractérisée en ce que**
la partie de conduite tubulaire (4) comprend un tube en matière plastique à trois couches pouvant être chauffé électriquement, avec une couche extérieure, une couche centrale et une couche intérieure, dans laquelle la couche centrale (40) de la partie de conduite tubulaire (4) est constituée d'un matériau en matière plastique rempli avec au moins un composant conducteur et la partie de conduite tubulaire (4) présente au moins deux conducteurs électriques (141, 142) ou conducteurs thermiques (41, 42) intégrés par extrusion dans sa paroi, dans laquelle les au moins deux conducteurs électriques (141, 142) ou conducteurs thermiques (41, 42) sont disposés à l'intérieur de la couche conductrice (40), et dans laquelle le dispositif de liaison (2, 3) est appliqué ou posé par assemblage sur la zone d'extrémité (45, 46) de la partie de conduite tubulaire par façonnage initial et/ou par liaison de matière, et la partie de conduite tubulaire (4) pourvue du dispositif électriquement conducteur (100) et le dispositif (100) électriquement conducteur s'étendent jusqu'à ou jusqu'à proximité de l'extrémité distale (20, 30), opposée à la partie de conduite tubulaire (4), du dispositif de liaison (2, 3) ou jusqu'à proximité du, devant ou dans un contour de raccordement (9), inséré dans le dispositif de liaison (140), d'un groupe ou d'une fiche de groupe pour permettre un chauffage total éventuel du dispositif de liaison sans conducteurs thermiques supplémentaires sur le côté extérieur du dispositif de liaison.

2. Conduite de fluides (1) confectionnée pouvant être chauffée électriquement selon la revendication 1,
**caractérisée en ce que**
au moins un élément de raccordement (6, 7) s'étend depuis le dispositif (100) électriquement conducteur jusqu'au côté extérieur du dispositif de liaison (2, 3).

3. Conduite de fluides (1) confectionnée électriquement conductrice selon la revendication 1 ou 2,
**caractérisée en ce que**
le dispositif de liaison (2, 3) est appliqué ou posé par assemblage sur la zone d'extrémité (45, 46) de la partie de conduite tubulaire par surmoulage, par application par injection, par coulage, par soudage par laser, par soudage par friction, par collage.

4. Conduite de fluides (1) confectionnée pouvant être chauffée électriquement selon l'une quelconque des revendications 1 à 3,
**caractérisée en ce que**
une couche centrale (40) de la partie de conduite tubulaire (4) est constituée d'un matériau en matière plastique rempli de suie conductrice, de poudre métallique ou de nanotubes de carbone.

5. Conduite de fluides (1) confectionnée pouvant être chauffée électriquement selon la revendication 4,
**caractérisée en ce que**
la partie de conduite tubulaire (4) présente deux à quatre, en particulier deux conducteurs électriques (141, 142) ou conducteurs thermiques (41, 42), en particulier des fils métalliques, des torons et/ou des conducteurs non isolés.

6. Conduite de fluides (1) confectionnée pouvant être chauffée électriquement selon l'une quelconque des revendications précédentes,
**caractérisée en ce que**
les conducteurs électriques (141, 142) ou conducteurs thermiques (41, 42) s'étendent en spirale tout autour d'un tube de base ou d'une couche intérieure (43) de la partie de conduite tubulaire (4) avec une pente importante (S), en particulier une pente (S) de 20 à 150 mm pour permettre ou faciliter un façonnage par pliage de la partie de conduite tubulaire (4).

7. Conduite de fluides (1) confectionnée pouvant être chauffée électriquement selon l'une quelconque des revendications précédentes,
**caractérisée en ce que**
un entrefer (81) isolant est prévu entre un tube d'isolation ou de protection (8) ou une gaine entourant celui-ci au moins en partie et la partie de conduite tubulaire (4) pour produire une action d'isolation pour la partie de conduite tubulaire (4) ou la partie de conduite tubulaire (4) présente une couche isolante, en particulier une couche extérieure (44) présentant une action isolante.

8. Conduite de fluides (1) confectionnée pouvant être chauffée électriquement selon l'une quelconque des revendications précédentes,
**caractérisée en ce que**
le dispositif de liaison (2, 3) comprend au moins une rainure de réception (33) destinée à recevoir une extrémité (80) d'un tube de protection ou d'isolation entourant la partie de conduite tubulaire (4) ou d'une gaine (8).

9. Conduite de fluides (1) confectionnée pouvant être chauffée électriquement selon l'une quelconque des revendications précédentes,
**caractérisée en ce que**
au moins un dispositif d'étanchéité est inséré ou appliqué par façonnage, en particulier est appliqué ou inséré par injection dans ou sur le dispositif de liaison (2, 3).

10. Conduite de fluides (1) confectionnée pouvant être chauffée électriquement selon l'une quelconque des revendications précédentes,
**caractérisée en ce que**
la partie de conduite tubulaire (4) présente une épaisseur de paroi (b) de 4 mm ou moins, en particulier de 1 mm ou moins, et/ou l'angle (a) entre deux conducteurs électriques (141, 142) ou conducteurs thermiques (41, 42) va de 10 à 360°, en particulier est de 180° et/ou le diamètre (d) des conducteurs électriques (141, 142) ou conducteurs thermiques (41, 42) est inférieur à 0,5 mm, en particulier à 0,4 mm et/ou la distance (a) des enroulements des conducteurs électriques (141, 142) ou conducteurs thermiques (41, 42) va de 20 à 60 mm, en particulier est de 40 mm.

11. Procédé de fabrication d'une conduite de fluides (1) selon l'une quelconque des revendications précédentes, **caractérisé en ce que**
- la partie de conduite tubulaire (4) est produite avec une paroi à trois couches de la partie de conduite tubulaire avec au moins un dispositif (100) intégré électriquement conducteur, réalisé en tant que conducteur de chaleur ou conducteur de froid et est pourvue d'au moins un dispositif de liaison (2, 3, 140) dans la zone d'extrémité, et
- dans au moins une zone d'extrémité (45, 46) de la partie de conduite tubulaire (4), le dispositif (100) intégré électriquement conducteur est dégagé, est mis en contact électriquement de manière prolongée par un dispositif de mise en contact (6, 7) et le dispositif de mise en contact (6, 7) est sorti de manière guidée sur le côté extérieur de la partie de conduite tubulaire (4) pour le raccordement à une source d'énergie électrique.

12. Procédé selon la revendication 11,
**caractérisé en ce que**
un contour de liaison est généré par façonnage initial ou un contour de liaison est appliqué par assemblage pour générer un dispositif de liaison (2, 3) pour la liaison fluidique sur la zone d'extrémité (45, 46) de la partie de conduite tubulaire (4).

13. Procédé selon la revendication 11 ou 12,
**caractérisé en ce que**
le dispositif (100) intégré électriquement conducteur, en particulier au moins un conducteur électrique (141, 142) ou un conducteur thermique (41, 42), est dégagé par découpe au laser.

14. Procédé selon la revendication 11, 12 ou 13,
**caractérisé en ce que**
la mise en contact du dispositif (100) intégré électriquement conducteur est effectuée avec au moins un élément de raccordement (6, 7) par brasage par induction ou par soudage par impulsions.
